(19) Europäisches Patentamt / European Patent Office / Office européen des brevets

(11) **EP 4 220 083 A1**

(12) **EUROPEAN PATENT APPLICATION**

(43) Date of publication:
**02.08.2023   Bulletin 2023/31**

(21) Application number: **23152622.9**

(22) Date of filing: **20.01.2023**

(51) International Patent Classification (IPC):
**G01C 21/00** $^{(2006.01)}$      **G06N 3/02** $^{(2006.01)}$

(52) Cooperative Patent Classification (CPC):
**G01C 21/3841; G01C 21/3811; G01C 21/3815; G06N 3/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **27.01.2022   GB 202201078**

(71) Applicant: **Aptiv Technologies Limited**
**St. Michael (BB)**

(72) Inventors:
• **Nunn, Christian**
  **42499 Hückeswagen (DE)**
• **Mueller, Dennis**
  **47445 Moers (DE)**
• **Roese-Koerner, Lutz**
  **42899 Remscheid (DE)**
• **Colling, Pascal**
  **42115 Wuppertal (DE)**

(74) Representative: **Hoffmann Eitle**
**Patent- und Rechtsanwälte PartmbB**
**Arabellastraße 30**
**81925 München (DE)**

(54) **METHOD OF DETERMINING A POINT OF INTEREST AND/OR A ROAD TYPE IN A MAP, AND RELATED CLOUD SERVER AND VEHICLE**

(57)    Provided is a computer-implemented method of determining a point of interest and/or a road type in a map, comprising the steps of: acquiring processed sensor data collected from one or more vehicles; extracting from the processed sensor data a set of classification parameters; and determining based on the set of classification parameters one or more points of interest (POI) and its geographic location and/or one or more road types.

FIG. 8A

FIG. 8B

FIG. 8C

EP 4 220 083 A1

## Description

## Technical Field

The present disclosure related to a computer-implemented method of determining a point of interest and/or a road type in a map, as well as a cloud server and a vehicle for making improved ADAS decisions based on the map.

## Background

In advanced driver assistance systems (ADAS) or autonomous driving (AD), high-definition (HD) maps are important. A HD map generally refers to a map, precise up to a centimetre level having more details (e.g. road markings, traffic signs, road barriers) than conventional automotive maps (e.g. used for conventional car navigation) and therefore may be used in AD.

Creating an HD map is a challenging task. Usually, map providers utilize multiple dedicated surveillance vehicles equipped with high-cost sensors (e.g. high-resolution camera and LIDAR). They then drive all roads in the relevant area to map and aggregate this data in an offline process. Sometimes, even additional information is annotated manually by human labour.

Alternatively, satellite images may be processed to generate road networks, or smart phones may upload position information for map generation. However, satellite images are usually old and provide little extra information and smart phones provide little extra information other than position.

Previous methods to predict locations of Points-of-interest (POI) and road types such as zebra-crossings, roundabouts, constructions sites or road conditions (e.g. highway, rural road, city road) mainly suffer from at least one of the three following disadvantages: a) Usage of high-cost sensors such as LiDAR (light detection and ranging) based sensors or DGPS (differential global positioning system) or manual annotation work, b) dependency on map data (this is a problem because map data will not exist for every location and get easily outdated), and/or c) a missing reliability estimation; that is, it is not sufficient to estimate presence or absence or POIs or the road type, without knowing if the estimate was done on a solid or sufficient amount of input data.

## Summary

Conventional maps outdate quite fast as the environment and road geometry can change quickly over time. It is thus a challenging task to create HD maps and keep them up to date.

Further, as those maps can set a kind of a framework in which the AD vehicle can move, for example, as HD maps can be seen as a backup solution for when the live system fails or is occluded, it is also important to provide up-to-date information as to points-of-interests (POI) and road types.

Previous methods to predict locations of POIs or road types mainly suffer from at least one of the three following disadvantages: a) Usage of high-cost sensors such as LiDAR (light detection and ranging) based sensors or DGPS (differential global positioning system) or manual annotation work, b) dependency on map data (this is a problem because map data will not exist for every location and get easily outdated), and/or c) a missing reliability estimation; that is, it is not sufficient to estimate presence or absence or POIs or the road type, without knowing if the estimate was done on a solid or sufficient amount of input data.

There is thus a need to predict locations of Points-of-interest (POI) and identify road types in an easier way, that is, that is adaptive to temporal changes (such as sudden road closures or traffic interruptions), is less costly, and is reliable.

The subject-matter of the independent claims solves the above-identified technical problems. The dependent claims describe further preferred embodiments.

According to a first aspect of the disclosure, a computer-implemented method of determining a point of interest and/or a road type in a map, comprises the steps of: acquiring processed sensor data collected from one or more vehicles; extracting from the processed sensor data a set of classification parameters; and determining based on the set of classification parameters one or more points of interest (POI) and its geographic location and/or one or more road types.

According to a second aspect of the disclosure, the determining is performed by using a trained neural network classifier that uses the set of classification parameters as input and outputs the at least one POI and/or road type as a classification result.

According to a third aspect of the disclosure, the trained neural network classifier is a trained convolution neural network classifier.

According to a fourth aspect of the disclosure, the method further includes: detecting and tracking a plurality of objects based on sensor-based data and localization data to determine a plurality of individual trails for each of a plurality of object classes.

According to a fifth aspect of the disclosure, the method further includes: aggregating each of the individual trails to determine a plurality of object class specific aggregated trails in a grid cell map representation of a map.

According to a sixth aspect of the disclosure, the determining of the one or more POI and/or at least one road type in the map is based on the object class specific aggregated trails.

According to a seventh aspect of the disclosure, object class specific histograms are determined for each grid cell of the map using the object class specific aggregated trails.

According to an eight aspect of the disclosure, the histograms are determined with regard to a plurality of different driving or walking directions.

According to a ninth aspect of the disclosure, the histograms include an average observed speed over ground and/or an average angle deviation of trails.

According to a tenth aspect of the disclosure, the histograms include a creation time of each individual trail.

According to an eleventh aspect of the disclosure, the method further includes: generating the map using the object class specific aggregated trails and the determined one or more POI and/or road type.

According to a twelfth aspect of the disclosure, the map is generated by using only aggregated trails that have been aggregated by using a minimum number of individual trails and/or have been aggregated by using a minimum number of trails determined within a specific amount of time in the past.

According to a thirteenth aspect of the disclosure, the map is generated by providing a reliability indication for the object class specific aggregated trails and/or the one or more POI and/or road type.

According to a fourteenth aspect of the disclosure, the processed sensor data are radar-based sensor data and GPS-based sensor data.

According to a fifteenth aspect of the disclosure, the processed sensor data are LiDAR-based sensor data and GPS-based sensor data.

According to a sixteenth aspect of the disclosure, a cloud server is adapted to perform the method of any of the first to fourteenth aspect.

According to a seventeenth aspect of the disclosure, a vehicle comprises a communication interface configured to receive a map including determined POIs and/or road types from a cloud server according to the fourteenth aspect; and a control unit configured to make advanced driving and safety decisions based on the received map.

According to an eighteenth aspect of the disclosure, a system comprises a cloud server according to the sixteenth aspect and a plurality of vehicles according to the seventeenth aspect.

**Brief Description of the Drawings**

**Figure 1** shows a system of vehicles and a cloud server according to an embodiment.

**Figure 2** shows a device according to an embodiment used for acquiring radar-based sensor data.

**Figure 3** shows a vehicle and detection areas according to an embodiment.

**Figure 4** shows programmable signal processing apparatus according to an embodiment.

**Figure 5** shows a flowchart of a computer-implemented method of determining or classifying POI(s) and/or road type(s) according to an embodiment.

**Figure 6** shows examples arrows of aggregated trails related a highway, a rural road, an urban road, and an urban road with a zebra crossing.

**Figure 7** shows an example of a local part of a map having 3 × 3 grid cells.

**Figures 8A** - **8C** shows examples of a grid cell statistics of oriented aggregated trails for a rural road, an urban road with zebra crossing, and an urban road, respectively.

**Figure 9** shows a flow diagram of a method to extract a set of classification parameters according to an embodiment.

**Figure 10** shows a flow diagram of a method implemented by vehicle according to an embodiment.

**Figure 11** shows a flowchart for training a neural network classifier according to an embodiment.

**Detailed description of Embodiments**

Embodiments of the present disclosure will now be described in reference to the enclosed figures. In the following detailed description, numerous specific details are set forth. These specific details are only to provide a thorough understanding of the various described embodiments. Further, although the terms first, second, etc. may be used to describe various elements, these elements should not be limited by these terms. These terms are only used to distinguish one element from another.

The present disclosure teaches the classification or identification of a) Point-of-Interests (POIs) such as roundabouts, zebra-crossings, constructions zones and the like. In a map, and/or b) road types such as a highway, a rural road, an urban or city road, a bus lane, a bicycle lane or a sidewalk. This classification or identification of POIs and/or road types may include an identification of the geographic location of the POIs and/or roads so that this information can be readily included into HD maps. Preferably, the classification or identification of POIs and/or road types is performed using low-cost sensors, that is radar and GPS, in other words, a camera-free and LIDAR-free identification and classification of POIs and/or road types. The identification also does not require DPGS systems or manual annotation work.

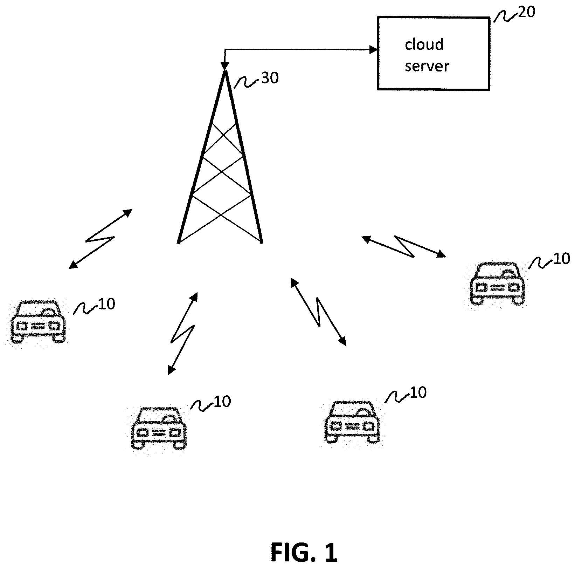

**Figure 1** illustrates a system of vehicles 10 and a cloud server 20 according to an embodiment. The vehicles 10 (e.g. a fleet of ADAS vehicles) are provided with a communication interface to implement a communication connection with the cloud server 20. Such a communication connection may be implemented in different forms; as illustrated in **Figure 1,** a vehicle 10 may have, for example, an over-the-air (OTA) interface (e.g. radio interface according to a wireless communication standard such as LTE, 4G, 5G, 6G) with a basis station 30. The basis station 30 provides a communication connection (e.g. via a core network, the internet or the like) to the cloud server 20. Based on this communication connection, data of the vehicles 20 may be uploaded to the cloud server 20, and map information or other ADAS-related information may be downloaded from the cloud server 20 to the vehicles 10, for example in the form of a Software-as-a-Service (SaaS). Here, aggregating the individual trails and deriving additional high-level information (POI(s) and/or road types) constantly updates the underlying map. The resulting up-to-date and accurate map can subsequently be downloaded from the cloud server 20 to the vehicles 10 to, for example, improve existing ADAS features.

The vehicles 10, in particular ADAS vehicles, may generally be equipped with a wide range of sensor units for environmental perception (e.g., camera and radar and/or LiDAR). These sensors allow the vehicles 10 to perceive its environment and, for example, detect lane markers, traffic signs and other road users including their dynamic properties (location and velocity relative to the ADAS vehicle). This perception software (SW) forms the basis of modern ADAS systems and will be present (in varying degrees of matureness and quality) in every ADAS vehicle. Based thereon, an ADAS vehicle is typically equipped with L2+ capabilities, that is, it can perform lane keeping and distance keeping.

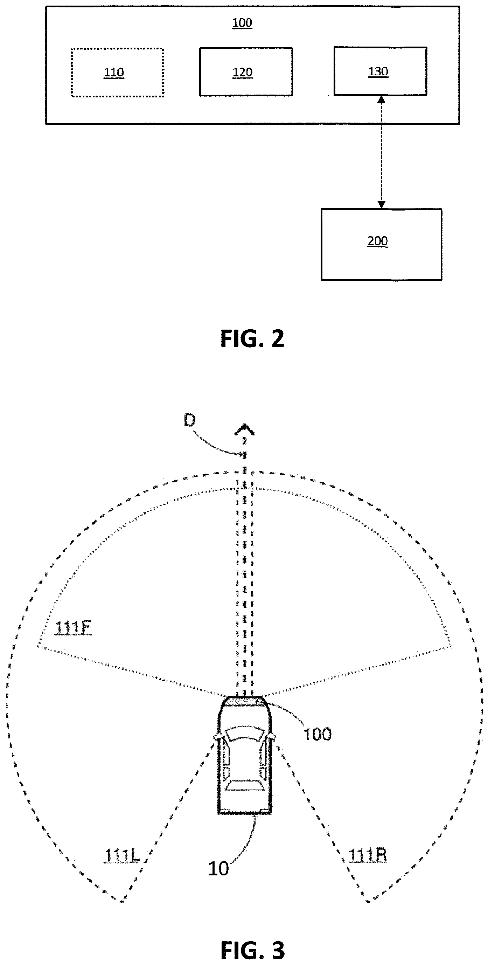

**Figure 2** shows a device 100 according to an embodiment used for acquiring radar-based sensor data. The device 100 may be provided to a vehicle 10, as shown in **Figure 3,** and preferably may be mounted on the vehicle 10 facing a driving direction D of the vehicle. The skilled person understands that it is not required that the device 100 faces the driving direction; the device 100 can also face to a side direction or to a rear direction. The device 100 may be a radar sensor, a radar module, part of a radar system or the like, of one or more detection areas 111F, 111L, 111R. The device 100 may also be a LiDAR sensor, a LiDAR module, part of a LiDAR system. The device 100 may also be a device for the acquisition and processing of a plurality of different sensor data (such as radar data and LiDAR data). The vehicle 10 may also have more than one of such devices 100.

The device 100 may be provided as part of or, as shown in of **Figure 2,** interact with a driver assistance system 200 of the vehicle 10. The driver assistance system of the vehicle 200 may include advanced driver-assistance system (ADAS) functionality or autonomous driving functionality.

A vehicle 10 may be any land vehicle that is moved by machine power, such as a car, a bus, a truck, a lorry or the like. The figures exemplify this vehicle 10 as a car, with which the device 100 is provided. The present disclosure is, however, not limited thereto.

The vehicle 10 is also provided with a localization unit such as GPS unit (not shown). The skilled person understands that a localization unit provides positioning information with regard to the vehicle over time, so that a trail (*first trail*) of the vehicle 10 (ego-vehicle) in a global coordinate system (GCS) can be determined. A trail can generally be considered as a path or trajectory (set of coordinates in space) that the vehicle (or any other object) follows over time in the GCS. Trail information can be stored in a memory of the vehicle together with additional meta-information, such as recording time, velocity of the tracked object and the like.

As illustrated in **Figure 2,** the device 100 includes an acquisitioning unit 120 and a determining unit 130 and may additionally include one or more sensors or sensor units (e.g. radar and/or LiDAR sensors) 110, but the one or more sensor units may also be provided separate to the device 100.

The following further illustrates an embodiment in which the one or more radar sensors 110 include on or more radar antennas. Herein, the one or more antennas may be configured to emit radar signals, preferably modulated radar signals, e.g. a Chirp-Signal. A signal may be acquired or detected at the one or more antennas and is generally referred to as return signal below. Herein, the return signal(s) may result from a reflection of the emitted radar signal(s) on an obstacle or object (such as a pedestrian, another vehicle such as a bus, car, bicycle or the like) in the environment or surrounding of the vehicle.

The one or more antennas may be provided individually or as an array of antennas, wherein at least one antenna of the one or more antennas of the radar sensor (s) 110 emits the radar signal (s), and at least one antenna of the one or more antennas detects the return signal(s). The detected or acquired return signal(s) represents a variation of an amplitude/energy of an electromagnetic field over time.

The acquiring unit 120 may be configured (e.g. programmed) to acquire sensor-based data of the at least one sensor unit 110 of the vehicle 10 as well as localization data related to a localization unit (e.g. GPS unit, not shown) of the vehicle 10. The sensor-based data may be radar data (from a radar sensor) and/or LiDAR data (from a LiDAR sensor). Acquiring the sensor-based data from the sensor unit(s) 110 of the vehicle may my performed via an intra-vehicle data communication interface, e.g. based on CAN bus communication or an Ethernet network to a zonal controller or domain controller of the vehicle 10.

In case of a radar system, the acquisitioning unit 120 may be configured (e.g. programmed) to acquire radar data (radar-based sensor data) regarding each of the one or more radar antennas of the radar sensor(s) 110, the acquired radar data may include range data and radial range rate (also referred to as Doppler) data. The acquisitioning unit 120 may acquire the return signal, detected at the one or more antennas, and may apply an analogue-to-digital (A/D) conversion thereto. The acquisitioning unit 120 may convert a delay between emitting the radar signal(s) and detecting the return signal(s) into the range data. The delay, and thereby the range data, may be acquired by correlating the return signal(s) with the emitted radar signal(s). The acquisitioning unit 120 may compute, from a frequency shift or a phase shift of the detected return signal(s) compared to the emitted radar signal(s), a doppler shift or a range rate shift as the range rate data. The frequency shift or the phase shift, and thereby the radial range rate data, may be acquired by frequency-transforming the return signal(s) and comparing its frequency spectrum with the frequency of the emitted radar signal(s). The determination of range data and radial range rate (Doppler) data and thus *a detection* from the detected return signal(s) at the one or more antennas may, for example, be performed as described in US 7,639,171 or US 9,470,777 or EP 3 454 079.

The processing unit 130 may be configured (e.g. programmed) to determine a first (individual) trail of the vehicle 10 itself using the localization data (e.g. using the GPS data) and a plurality of second (individual) trails of other vehicles or other objects around the vehicle 10 (in the detection area of the sensor unit(s)) using the acquired sensor-based data. Here, the first trail is associated with the individual path of the vehicle 10 itself (also referred to as ego-vehicle in the following). In other words, a trajectory or trail $t_{ego}$ of the ego-vehicle may be provided by the localization (using the GPS data stream) and the (known) dimension of the vehicle.

The skilled person understands that this first trail may be a set of GPS or DGPS localization data of the vehicle 10. The second trails are associated with individual trails or paths of other observed road users detected in sensor detection area of the ego-vehicle 10. Here, as the sensor-based data (due to radar and/or LiDAR detection) are typically associated with relative position data with regard to the ego-vehicle, the localization data (first trail) can be advantageously used to determine the plurality of second trails in the GCS.

The processing unit 130 may be further configured (e.g. programmed) to aggregate the first trail (of the ego-vehicle) and the plurality of second trails of the other vehicles (other road users) or to aggregate the plurality of second trails of the other vehicles (other road users) to generate a plurality of aggregated trails. Generating aggregated trails can generally be considered as collecting of the individual trails together, in other words as a sum of the individual trails. The skilled person understands that aggregating individual trails together allows to determine a (statistically averaged) trail that a majority of road users have taken and in which individual deviations are averaged out. As the first trail of the ego-vehicle usually has a better detection accuracy, e.g. because GPS localization can be performed with high accuracy), as compared to the sensor-based determination of the second trails of the other vehicles, this further improves the accuracy of the aggregated trails.

Here, the generated aggregated trails can be included into a grid map representation of the map (HD map). That is, a map (e.g. in a 2D Cartesian coordinate system) of a predetermined spatial resolution may be subdivided into a plurality of individual grid cells of a predetermined size, for example each covering a size of 10cm × 10cm, and the aggregated trails are included in that map. Thus, a single ego vehicle can provide data from which detailed information about multiple lanes can be aggregated to create a HD map.

For example, using bounding box detection and tracking (by radar-based data and/or LiDAR-based data), if one of the other road user is detected, the position, orientation and driving direction can be derived from the GPS position of the ego-vehicle and the calibration of the sensor system. A trajectory (track) or trail $t_D$ of a detected vehicle may then be defined as a trajectory of detected cuboids $c_j$ in respective detection frames $j = 1, ..., p$, i.e., $t = \{c_1, ..., c_p\}$, where $p$ is the last detected frame. Each trail $t_D$ may be enriched with meta information, such as a tracker confidence value $t_{conf}$ 6 [0, 1], a distance range

$$t_r \in \mathbb{R}$$ (set of real numbers) in which the cuboids should be located to the ego-vehicle, and/or the Euclidean distance of the first and the last cuboid of a trail

$$t_{len} \in \mathbb{R}$$. In general, each trail can be associated (e.g. stored) together with such meta information as described here, or further described below.

The detected and tracked cuboids may then be processed into an individual trail. The entire geographical area covered by the cuboids may be considered as the individual trail; that is, also the overlapped region of two subsequent cuboids is preferably counted only once for the individual trail.

By recording a location multiple times and by detecting multiple vehicles or other road users (e.g. bicycles, pedestrians) covering the same location, multiple detections can be given (*aggregated*) for the lane estimation. Local grid cell regions of the map may thus have aggregation values, initially set to zero and increased by one for every trail going through the local grid cell region.

For the aggregation, a given geographical location (local region) may be represented as a grid map, where each grid cell covers a predetermined area, e.g. a 10cm × 10cm area in GCS. A density map

$$D \in \mathbb{N}^{m \times n}$$ may be defined with regard to the aggregation of a given spatial location. The density map D may represent a density of moving vehicles or other road users.

At the beginning all values of the grid map $D$ are set to 0. Then, an iteration is performed over all trails ($t_D$ and/or $t_{ego}$) that cover the given location. For every cuboid $c_j$ of a moving trail $t_D$, the detected cuboids may be mapped into the density map and the respective values of the density map are increased by a predetermined value (e.g. by a value of one) in case of overlap of the location (grid) with the cuboid.

Each value in D can be increased only once by the cuboids of the current trail. That is, when considering, for example, 3 detected cuboids, even in an overlapped region of 2 subsequently detected cuboids, the value in *D* is only increased once. This prevents the values in *D* from incorrectly adding up, for example for a moving vehicle that comes to a stop e.g. when it comes to a traffic light.

Based thereon, after processing the cuboids of a first trail, a value in *D* can either be 0 or 1. Then, after processing the cuboids of a second trail, a value in *D* can either be 0 or 1 or 2, etc.

The skilled person understands that the aggregated trails can be generated in any traffic environment and also in any geographical area, and corresponding maps are low-cost accurate and reliable maps.

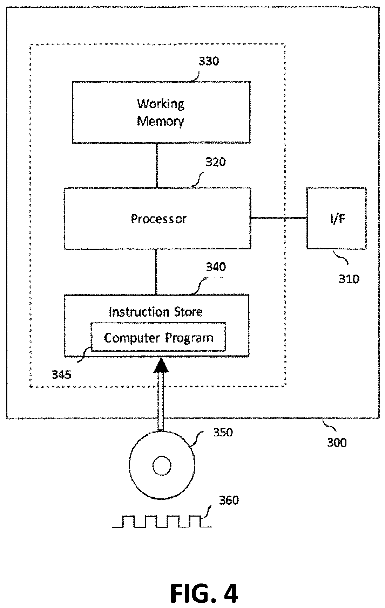

**Figure 4** is a schematic illustration of programmable signal processing apparatus 300, which may be configured to implement the functionality of the device 100 of **Figure 2.**

The signal processing apparatus 300 has an interface module 310 providing means, e.g. one or more antennae or wired connections, for transmitting and receiving information, e.g. for providing a communication connection to the cloud server 20. The signal processing apparatus 300 also has a processor 320, e.g. a CPU, for controlling the programmable signal processing apparatus 300 to perform the functions of the device 100, a working memory 330, e.g. a random-access memory, and an instruction store 340 storing a computer program 345 having computer-readable instructions which, when executed by the processor 320, cause the processor 320 to perform the functions of the device 100.

The instruction store 340 may include a ROM, e.g. in the form of an electrically-erasable programmable read-only memory (EEPROM) or flash memory, which is pre-loaded with the computer-readable instructions. Alternatively, the instruction store 340 may include a RAM or similar type of memory, and the computer-readable instructions can be input thereto from a computer program product, such as a computer-readable storage medium 350 such as a CD-ROM, etc. or a computer-readable signal 360 carrying the computer-readable instructions.

The device 100 may alternatively be implemented in non-programmable hardware, such as an application-specific integrated circuit (ASIC) or in any other suitable manner, using any suitable combination of hardware and software components.

As discussed above, the present disclosure provides various techniques to classify POI(s) and/or road types in a surrounding of one or more vehicles 10 in a more accurate and reliable manner.

The processing apparatus 300 may also be implemented in the cloud server 20 to implement the functionality of the device 100 of **Figure 2.** In other words, the functionality of the acquiring unit 120 and the processing unit 130 can also be implemented in the cloud server.

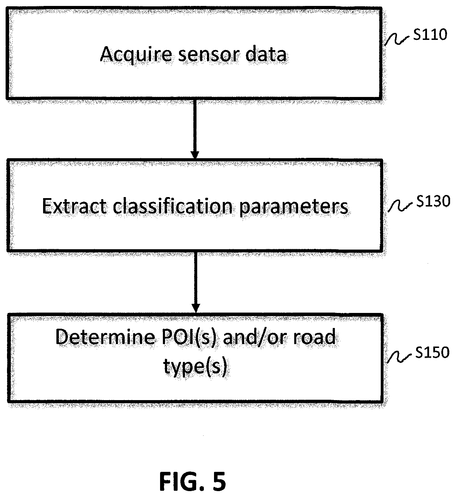

**Figure 5** shows a flowchart of a computer-implemented method of determining or classifying POI(s) and/or road type(s) according to an embodiment. The method may be implemented in the cloud server 20, or parts of the method may be implemented in the vehicle 10 and other parts of the method may be implemented in the cloud server 20.

The following example embodiments describe the determining or classifying of POI(s) and/or road type(s) based on radar data, i.e. as a camera-free and LIDAR-free method that avoids usage of high-cost vehicular equipment. The skilled person understands, however, that this is not limiting.

According to a step S110 in **Figure 5,** the method acquires processed sensor data. The collected processed sensor data may be radar-based sensor data acquired from respective sensor unit(s) 110 (processed as described below, for example) and processed localization data from a localization sensor, such as a GPS sensor. The processed sensor data may also be acquired via an over-the-air interface at the cloud server 20. The skilled person understands that the radar-based senor data can be used for object detection and tracking of other vehicles and objects in a detection area of a vehicle 10, and that the localization data can be used for determining a position and trail (*first trail*) of the vehicle (ego-vehicle) 10 itself.

The acquisition unit 120 may acquire and process the radar data in a data cube indicating, for example, range and angle values in a polar coordinate system, each for a plurality of radial range rate (Doppler) values. In such a case, the acquisition unit 120 (or alternatively the determining unit 130 described below) may be further configured to perform a conversion of the (range, angle) data values from polar coordinates into Cartesian coordinates, i.e. a conversion of the (range, angle) data values into (X, Y) data values. Advantageously, the conversion may be performed in such a way that one or more multiple Cartesian grids with one or more spatial resolutions and spatial dimensions are generated, for example a near range (X, Y) grid having a spatial dimension of 80m by 80m and a spatial resolution of 0.5m/bin and a far range (X, Y) grid having a spatial dimension of 160m by 160m and a spatial resolution of 1m/bin.

In other words, given acquired radar data in a bird's eye view (BEV) from a radar point cloud, first the point cloud may be processed to be converted into one or more grids in a world Cartesian coordinate.

That is, the radar data may be defined in a grid of respective spatially resolved cells of the spatial environment of the vehicle 10. The spatially resolved cells (which also be referred to as data bins or data slots) may thus be defined in the environment of the vehicle with a specific spatial resolution (such as 0.5m/cell). Further, the radar data may be acquired for a plurality of timesteps $t_1, t_2, ..., t_N$, each timestep representing a so-called snapshot or frame (i.e. full sensor data acquisition) of the environment of the vehicle at a respective current time. It is understood that the spatial environment of the vehicle may change due to a movement of the vehicle itself as well as due to the movement of non-stationary objects in the environment.

The sensor data may be acquired in step S110 by the vehicle 10 using the acquisitioning unit 120, as described above, or, if the method is implemented by a cloud server 20 or another entity outside the vehicle, may be acquired via an OTA communication connection from one or more vehicles for further processing.

The acquiring of processed sensor data may further include a detecting and tracking of a plurality of objects based on the sensor data (e.g. radar-based data and localization data) to determine a plurality of individual trails (*second trails*) for each of a plurality of object classes. In particular, the method may further determine individual trails that are object class specific, i.e. individual trails for each of a plurality of object classes.

Based on the acquired sensor data (e.g. radar data), determining unit 130 may thus detect and track one or more objects in the environment of the vehicle 10, and may also distinguish different types of objects (such as cars, trucks, busses, motorcycles, bicycles, pedestrians). For example, machine learning techniques to detect, track and distinguish different objects (e.g. based on the size of the radar point cloud, the reflection intensity and the like) are known (Manjunath et al. "Radar Based detection and Tracking for Autonomous Driving", 2018 IEEE MTT-S International Conference on Microwaves for Intelligent Mobility, DOI: 10.1109/ICMIM.2018.8443497). The determination unit 130 may thus, preferably in combination with the localization unit (see above) to have positional information of the vehicle in the CGS, determine a plurality of individual trails (*second trails*) of tracked objects. For example, the determination unit 130 may determine individual trails of a first car, a second car, a bus, and a pedestrian, respectively.

The determination unit 130 may further determine a plurality of individual trails (object class specific trails) for each of a plurality of object classes. Here, detected objects may be distinguished according to an object type or class. That is, a plurality of object classes may be considered, for example, a first object class with regard to cars, a second object class with regard to busses, a third object class with regard to trucks, a fourth object class with regard to motorcycles, a fifth object class with regard to bicycles, and a sixth object class with regard to pedestrians. In the above example of individual trails there is thus an individual trail of the first car and the second car in the object class "cars", there is an individual trail in the object class "busses", there is an individual trail in the object class "pedestrians", but no individual trail in the object classes "trucks", "motorcycles", and "bicycles".

The skilled person understands that this is a non-limiting example of such object classes and other more or less specific classes can also be considered, for example, a first object class regarding 4-wheeled vehicles, a second object class regarding 2-wheeled vehicles, and a third object class regarding pedestrians.

As discussed above, using the acquired radar data, a plurality of different objects can thus be detected and tracked over time to determine individual trails for each of a plurality of object classes *(second trails)*. Further, using the localization (e.g. using GPS) data in GCS, the relative positions of radar detections of a vehicle and the tracking of objects can also be transformed into the GCS so that the individual object trails can also be provided in the GCS. Therefore, the second trails may generally be considered as a path or trajectory (set of coordinates in space) that a tracked object follows over time in the GCS.

Further, when determining the individual trails, meta-information (*classification parameter*) associated with the individual trails such as speed data (e.g. based on detected Doppler values), moving direction, date and time of trail detection, total amount of tracked objects and the like may also be kept (e.g. stored in association with the individual trails).

The determination unit 130 may further aggregate the object class specific trails to determine a plurality of object class specific aggregated trails in a grid map representation of a map. Generating aggregated trails can generally be considered as collecting of the individual trails together, in other words as a sum of the individual trails per object class. The skilled person understands that aggregating individual trails together allows to determine a (statistically averaged, collective) trail that a majority of road users have taken and in which individual deviations are averaged out.

The aggregation of the object class specific trails to determine a plurality of object class specific aggregated trails in a grid map representation of a map may also be performed in the cloud server, e.g. after the one or more vehicles have communicated the processed sensor data and/or the individual trails and meta-information via an OTA communication interface to the cloud server 20.

Here, the generated aggregated trails can be included into a grid map representation of the map (HD map). That is, a map (e.g. in a 2D Cartesian coordinate system) of a predetermined spatial resolution may be subdivided into a plurality of individual grid cells of a predetermined size, for example each covering a predetermined size of, for example 2m × 2m, and the aggregated trails are included in that map. Naturally this example of the size of individual grid cells is not limiting, and larger or smaller grid cell sizes can be used. The skilled person understands that the grid cells should not be made too small in order to have a sufficient amount of information per grid cell. Thus, a single ego vehicle can provide data from which detailed information about multiple lanes can be aggregated. The skilled person understands that the aggregated trails can be generated in any traffic environment and also in any geographical area, and corresponding maps are low-cost accurate and reliable maps. The aggregated trails may also be stored together with additional meta information (*classification parameters*), e.g. related to an average speed per object class, time and date of creation, number of individual trails used for the aggregation or the like.

According to a step S130 in **Figure 5,** a set of classification parameters can be extracted from the processed sensor data.

As explained, for each grid cell of a map, the set of classification parameters may include one or more of:

- a detected individual speed in grid cells, per object class;
- a detected average speed in grid cells, per object class;
- a moving (driving or walking) direction in grid cells, per object class;
- an average angle deviation of trails in grid cells, per object class;
- a histogram (example of a statistics for grid cells of the map) regarding observed speed and/or average angle deviation of the trails, per object class;
- date and time of determined trails in grid cells (individual and aggregated) creation, per object class;
- an amount of tracked objects in grid cells, per object class and in total.

Such a set of extracted classification parameters can be used to determine one or more POIs and its geographical location, as well as determine one or more road types based on the following considerations.

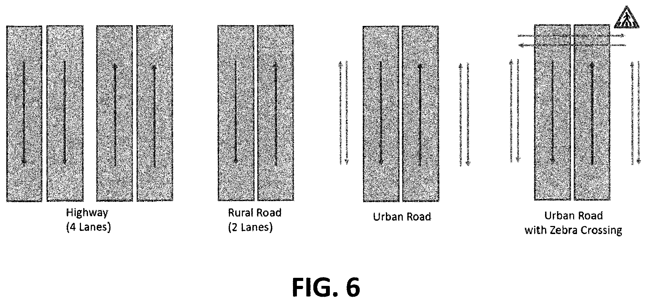

In particular, the above-mentioned classification parameters are chosen, such that they allow to distinguish, for example, different road types as can be seen in **Figure 6** (in which the arrows schematically indicate aggregated trails on a road (related to a vehicle) and next or across a road (related to pedestrian movement). For a highway, for example, multiple aggregated trails are expected to go into the same direction and multiple aggregated trails to go in the exact opposite direction (as shown in the left panel of **Figure 6** for a highway of 4 lanes), but no pedestrian trails to be present in that area. For a rural road (as shown in the panel second from left in **Figure 6**), a single aggregated trail may be expected going in each direction. Also, the distance between both directions (lanes) will be smaller compared to a highway scenario. Further, for a city or urban road (as shown in the panel second from right in **Figure 6**), additional movement patterns for pedestrians and/or bicycles are expected, likely next to the lanes, and in both directions. If a zebra-crossing (or a similar type of pedestrian crossing) is present in the scene as a POI (as shown in the right panel of **Figure 6**), the movement patterns of lane users (cars, busses, tracks and the like) will change: Slower average speed before and directly after the crossing can be expected in both directions. The pedestrian movement pattern will change as well. That is, cross-traffic can be expected likely pointing to a Zebra crossing (PoI).

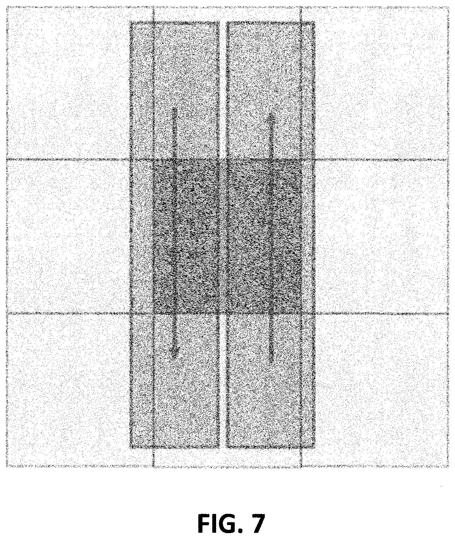

To further illustrate the extraction of classification parameters, reference is further made to **Figure 7** which shows an example of a local part of a map having $3 \times 3$ grid cells, wherein the central grid cell is highlighted. In the schematic example of **Figure 7,** two aggregated trails are shown. Further, each aggregated trail may be quantified based on its direction, e.g. quantified into a plurality of, for example 8, dominant directions (e.g. North, North East, East, etc.). In the schematic example of **Figure 7,** a first aggregated trail is in the direction top to bottom ("South") and a second aggregated trail is in the direction bottom to top ("North"), together with identified lanes of opposite driving direction of a 2-lane road. The skilled person understands that this is an illustrative example for the purpose of explanation and each grid cell may contain a plurality of aggregated trails passing though it in a plurality of different directions. As explained above, the aggregated trails in each cell may be associated with meta-information which can be used as a set of classification parameters.

According to step S150 of **Figure 5** the one or more POIs and the corresponding geographic location (related to the extracted grid cell) and/or the road type may be determined based on the extracted set of classification parameters. That is, the extracted classification parameters (e.g. in each of local grid cells of a map: information regarding aggregated trails, individual trails, meta-information, grid cell statistics) can be used to determine POI(s) and the associated geographical position in the map and/or road types.

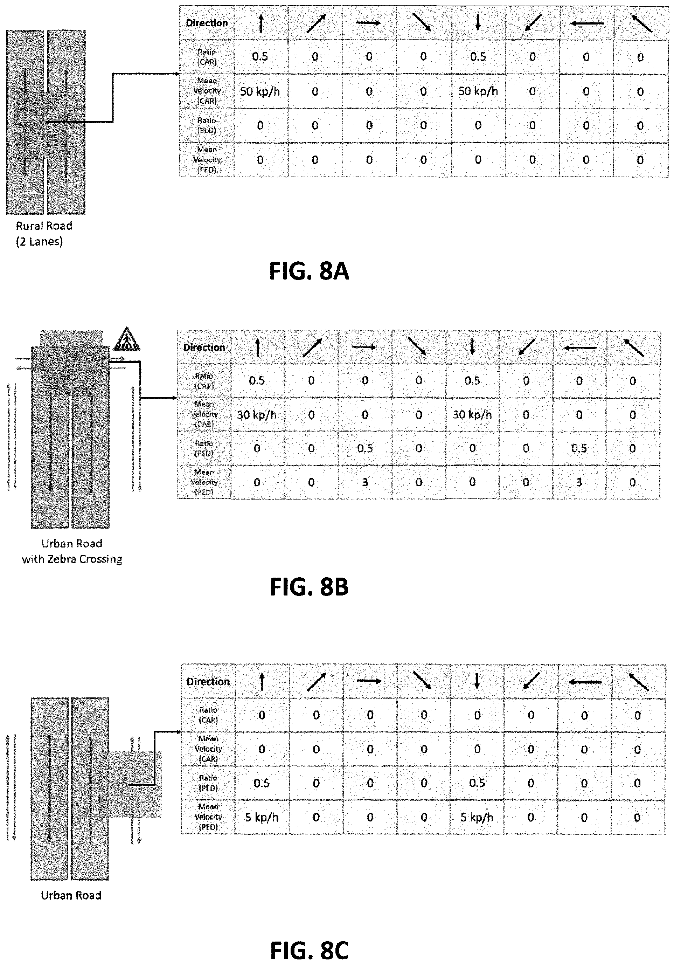

**Figures 8A** - **8C** show illustrative examples of a grid cell statistics (e.g. in the form of grid cell histograms for a grid cell) of oriented aggregated trails (also referred to as oriented gradients) and the velocity distribution for different object classes.

In particular, **Figure 8A** shows an illustrative example of a grid cell statistic of oriented aggregated trails (oriented gradients) and the mean velocity for the object classes of "car" and "pedestrian" for a grid cell on a rural road. As can be taken from **Figure 8A,** no pedestrian trails in any direction have been detected in the grid cell, while a ratio of aggregated car trails in the direction "North" and in the direction "South" is 0.5, and cars have a mean velocity of 50 kph (kilometres per hour) in both direction. As no further directions or lanes are detected, the grid cell can be classified or determined to be associated with the road type of a rural road (having 2 lanes).

**Figure 8B** shows a further illustrative example of oriented aggregated trails (oriented gradients) and the mean velocity for the object classes of "car" and "pedestrian" for a grid cell on an urban road with Zebra crossing. As can be taken from **Figure 8B,** pedestrian trails have been detected with equal ratio in the "East" direction and the "West" direction, where the pedestrians have a mean velocity of 3 kph (kilometres per hour), while a ratio of aggregated car trails in the perpendicular directions "North" and "South" is 0.5, and cars have a mean velocity of 30 kph (kilometres per hour) in both direction. As no further directions or lanes are detected, but with pedestrian movement, the grid cell can be classified to be associated with the road type of an urban road (having 2 lanes) and further be associated with a Zebra crossing (as an example of a POI).

**Figure 8C** shows an illustrative example of a grid cell statistic of oriented aggregated trails (oriented gradients) for the object classes "car" and "pedestrian" for a local grid cell next to an urban road. As shown, in this particular grid cell no vehicular movement is detected in any direction, while pedestrian trails have been detected with equal ratio in the "North" direction and the "South" direction, where the pedestrians have a mean velocity of 5 kph (kilometres per hour). That is, such a local grid cell statistics (e.g. in the form of grid cell histogram) can identify a pedestrian walkway (as a road type) and/or that the neighbouring grid cell relates to an urban road rather than a rural road or a highway.

A similar statistical analysis may be performed for other POIs and other road types such as traffic light scenes, construction sites, roundabouts, and the like which have distinct extraction parameters. For example, if there is a construction site, this will be easily identified because the other traffic participants behave accordingly. As such, a set of distinct extraction parameters can be used to determine a specific POI and/or road type.

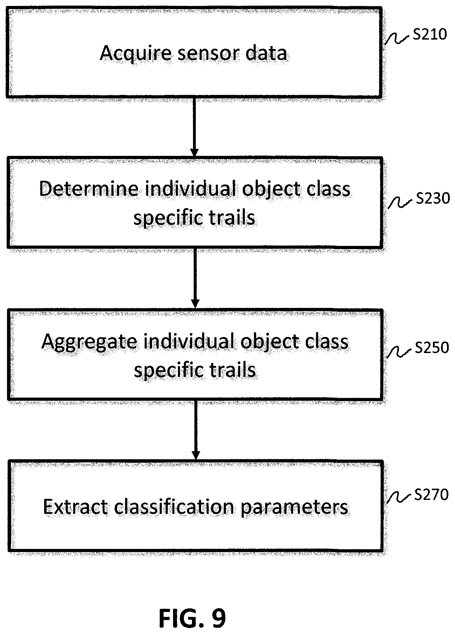

**Figure 9** shows a flow diagram of a method to extract a set of classification parameters (to be used for determining POI(s) and/or road types) according to a preferred embodiment.

According to a step S210 in **Figure 9,** the method acquires processed sensor data, e.g. radar-based sensor data and localization data of at least one vehicle. As explained above, the radar-based sensor data may be acquired from a radar system 110 for the purpose of object detection and tracking while the localization data are, for example GPS-based data that are acquired for the purpose of positioning and tracking (*first trail*) of an ego-vehicle.

According to a step S230 in **Figure 9,** the method may further determine individual trails that are object class specific, i.e. individual trails for each of a plurality of object classes. The individual trails can be determined for the ego-vehicle itself based on the localization data (e.g. based on the GPS data stream) as well as for the detected objects (different classes of vehicles, pedestrians) based on the processed sensor data. That is, the plurality of objects can be detected and tracked based on the radar-based data to determine a plurality of individual trails for each of a plurality of object classes. Here, the localization data (providing localization information in the GCS) are preferably used to determine GCS coordinates for the tracked (relative) coordinates of the detected objects.

According to a step S250 in **Figure 9,** the method

od may further aggregate each of the individual trails to determine a plurality of object class specific aggregated trails in a grid cell map representation of a map (HD map). The aggregation, as explained above, may be considered as a collection or summing up of the individual trails within an individual object class. In the above example of an individual trail of a first car and another individual trail of another car, both individual trails are aggregated together to a single aggregated trail in the object class "cars". Here, the individual trail of the ego-vehicle (first trail) may also be used for determining the aggregated trails. This may further improve the accuracy of the aggregated trail, in particular because the individual trail of the ego-vehicle can be obtained from the localization data which may be more accurate than the radar-based data.

In a preferred embodiment, when determining the object class specific aggregated trails, the aggregation may be performed by using only the most recent individual trails, e.g. individual trails as determined within a specific amount of time, for example within the last day, the last 5 hours, or the last 2 hours or the like. This allows to take into account only the most up-to-date and therefore more reliable trails into account.

That is, the aggregation step can be performed to constantly update the aggregated trails and therefore the map. The aggregated trails may be composed of individual connected trail segments, e.g. segments connected between respective grid cells of the map. Preferably, the individual segments are associated (e.g. stored) with additional meta-information such as: object class forming this aggregated trail, average speed on this segment, driving or walking direction or angle, a total number of individual trails used for this segment, date and time of creation of the individual trails, a number of recent individual trails (e.g. less than 2 hours old), and the like. As such, the resulting map may be represented as a collection of such aggregated trail segments in the GCS.

According to a step S270 in **Figure 9,** the method may further extract classification parameters based on the object class specific aggregated trails. For example, in respective grid cells of the map, segment information of the aggregated trail(s) as well as associated meta-information can be used as a local set of classification parameters. Based thereon, the at least one POI and/or at least one road type in the map can be determined. The determination of the one or more POIs and/or the one or more types in the map can thus be based on the information related to the object class specific aggregated trails.

Based thereon, high-level determination or classification information regarding POIs and road types can thus be derived from aggregated trail maps and the associated meta-information which can be generated from low-cost, low-level vehicle sensor data.

While specific traffic and/or movement patterns as well as velocity patterns indicate the presence of specific POIs and road types and therefore can be implemented in a deterministic algorithm to determine or classify a POI and/or road type, the determination is preferably performed using a trained neural network classifier that uses the set of classification parameters (e.g. based on object class specific aggregation trails and corresponding meta-information in respective segments or grid cells of the map) as input and outputs the one or more POIs and/or road type as a classification result.

The trained neural network classifier is preferably a convolution neural network (CNN) - based classification algorithm (in short, a CNN-based classifier). Thereby, the CNN-based classifier can take into account the spatial information inherent to the aggregated trails / segments and may also consider the meta-information of the individual segments for the classification. For this, the CNN-based classifier typically has a Kernel size of, for example, 3×3 or 5×5, which allows the neural network to utilize the neighbourhood information of each grid cell or segment as context information in order to improve the classification quality.

The CNN-based classifier is preferably trained by using annotated (previously known) POIs and road types in one or more available HD maps (HD map of limited region) as ground truth, e.g. HD maps generated using high-cost sensors or in which annotation has been performed manually. That is, the CNN-based classifier learns to predict the presence and identification of POIs and/or road types purely previously aggregated tracks. A preferred embodiment of training the neural network classifier will be described below.

According to a preferred embodiment, object class specific histograms, as described above, can be determined for each grid cell of the map by using the object class specific aggregated trails. The object class specific histograms are further examples of the set of classification parameters and can be input to the trained neural network classifier to determine the POI(s) and/or road types. The skilled person understands that the object class specific histograms include local grid map information regarding the detected objects movement.

The histograms (set of classification parameters) are preferably determined with regard to a plurality of different driving (for each of the respective classes of vehicles) or walking directions (for the class pedestrians), e.g. with regard to the 8 dominant directions described in the context of **Figures 8A** - **8C.** This detailed local information for respective grids of the map allows the trained neural network classifier to appropriately associate neighbourhood relations between adjacent grid cells and therefore improves the classification results.

The histograms (set of classification parameters) can further include local information as to an average observed speed over ground (preferably according to each of the dominant directions) and/or an average angle deviation of trails with regard to the grid cells of the map. This detailed local information for respective grids of the map allows the trained neural network classifier to appropriately associate speed differences and/or angle differences between adjacent grid cells and can therefore further improve the classification results. For example, distinct POIs have been identified to be related with distinct speed and/or angle differences.

The histograms (set of classification parameters) preferably also include a creation time of each individual and/or aggregated trail. That is, the set of classification parameters are associated with a creation time. Based thereon, the trained neural network preferably uses only recent classification parameters, i.e. have been created within the last predetermined amount of time (such as the last hour, the last 2 hours, the last day or the like) so that only up-to-date sensor data is used to determine POIs and/or road types.

That is, when generating the map using the generated object class specific aggregated trails and the determined one or more POIS and/or road types, the map is preferably generated by using only aggregated trails that have been aggregated by using a minimum number of individual trails (such as a minimum of 100 individual trails, i.e. a certain number of total updates) and/or have been aggregated by using a minimum number of trails determined within a specific amount of time in the past (such as at least 10 trails in the last 10 minutes, i.e. a certain number of recent updates) and/or by using determined POIs and/or road types that have determined by extracting classification parameters from such a minimum number of individual trails and/or minimum number of recent trails.

Based thereon, the map can thus be generated by providing a reliability indication for the object class specific aggregated trails and/or the one or more POI and/or road type. ADAS vehicles can advantageously use this reliability indication (e.g. indicating high reliability if a first threshold number of detected trails have been used, medium reliability if a second threshold number of detected trails have been used, and lower reliability if a third threshold number (e.g. the minimum number discussed above) of detected trails have been used) when making advanced driving and safety decisions.

Such a HD map can thus be easily generated and constantly updated by the cloud server 20. The HD map including determined POIs and/or road types can be downloaded to the fleet of vehicles 20 and may advantageously be used for improved ADAS functionality. That is, the HD map can set a framework in which the vehicles 20 can move, and furthermore can be seen as a backup solution when the live ADAS system fails or a camera thereof is occluded.

Such updated maps may be made public, e.g. by the cloud server 20, only after a critical amount of "consensus" is reached, i.e. only after a certain minimum number of individual trails (overall and/or per class) have been observed per grid cell of the map.

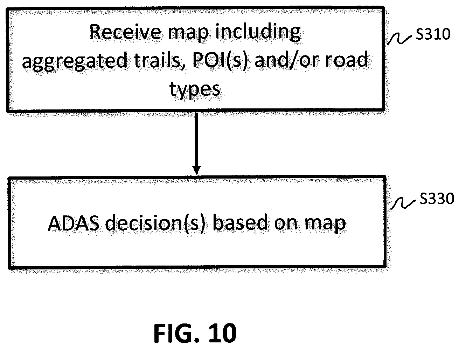

**Figure 10** shows a method implemented by vehicle according to a further embodiment. A vehicle 10 has a communication interface (such as I/F 310 in **Figure 4**) to communicate with the cloud server 20. Via the communication interface, the vehicle 10 can receive a map (HD map) including POIs and/or road types which have been determined according to one of the embodiments described above, as well as aggregated trails (step S310). The vehicle further has a control unit (such as the processor 320 in **Figure 4,** or the driver assistance system 200 of the vehicle 10. The driver assistance system of the vehicle 200 in **Figure 2**). The control unit makes advanced driving and safety decisions (e.g. ADAS decisions and/or AD decisions) based on the received map which includes information regarding the identified POIs, road types, aggregated tails and/or meta-information as described above (step S430). Therefore, the vehicle 10 has not only access to its own perception information extracted from the equipped sensors but also to the aggregated trails and/or meta-information from the aggregation service of the cloud server and can therefore make improved ADAS decisions.

For example, the aggregated trails and meta-information of the received map includes information regarding updated average speed driven on lanes and how recent this information was, which can be used to perform an efficient route planning.

According to a preferred embodiment, the control unit may be configured to use only aggregated trails in the map which have been aggregated by using a minimum number of individual trails and/or have been aggregated by using a minimum number of trails determined within a specific amount of time in the past. In particular, aggregated trails can carry meta-information about how many individual trails have been used to generate (and confirm correctness of) this aggregated trail, as described above. The aggregated trails can further carry meta-information about how old the latest trails were when being aggregated into this aggregated trail. The control unit of the ADAS system can thus now determine a "quality" of this aggregated trail by only consuming those trails which

a) have received enough total individual trails (e.g. minimum number of 100 individual trails) and/or b) have received enough recent trails (e.g. a minimum of 10 trails in the last 10 minutes). The skilled person understands that the specific examples of a minimum number of individual trails and the minimum number of trails within a last specific amount of time are non-limiting examples.

This method ensures that correctness and accurateness of the consumed trails can be confirmed by the control unit of the ADAS system before using these aggregated trails for ADAS decisions. That is, the control unit may be further configured to output a control instruction to the vehicle to follow one of the aggregated trails extracted from the received map, to approach a specific POI, or to use a specific road type in particular in case of a blocking situation of the camera of the vehicle.

More specifically, the ADAS vehicle 10 may be equipped with state-of-the-art L2 autonomous driving capabilities, and thus can actively follow lane markers by observing them with its own perception sensors (e.g. a camera system) and/or can thus actively control its longitudinal distance to any leading vehicle (e.g. by deploying a radar for distance measurements). If, and only if, the perception software fails to observe its surrounding (e.g. due to a camera blockage or being blinded by direct sunlight), a typical ADAS Vehicle will stop functioning and alerting the driver to take over control of the vehicle. This interruption can happen spontaneously and without pre-warning time for the driver. As the system requires an immediate take-over from the human driver and thus the constant attention of the driver, it can only qualify as a L2 autonomous driving system.

With the additional information (aggregated trails and/or meta-information and/or POIs and/or road types) from the cloud aggregation service of the cloud server 20 being made available and preferably the confirmation of "correctness" and "accurateness" as outlined above, the control unit of the ADAS system can now perform a different approach to handle this "blockage" situation of its perception sensors. Instead of directly disabling the ADAS functionality and expecting the driver to take over immediately, the ADAS system can thus fallback to following an aggregated trail on the map it received from the cloud service (cloud server).

The control unit preferably applies this fallback only under the following conditions: a) Perception of other road users (e.g. based on radar sensor(s)) is still functional, thus it can be guaranteed that the road ahead is actually free of obstacles and b) the consumed aggregated trails of the map are recent and accurate, as described above.

According to a further preferred embodiment of making ADAS decisions based on the received map, the control unit may be further configured to output a control instruction to the vehicle 10 to follow the aggregated trail as long as the aggregated trails are accurate.

That is, the data related to the aggregated tails and/or meta-information and/or POIs and/or road types received from the cloud aggregation service (cloud server 20) provide a "look-ahead" for the ADAS system to enable "trail following". As long as there is enough "look-ahead" information available, thus there are enough aggregated trails available which satisfy the above conditions to be considered "recent" and/or "accurate", the control unit can continue to operate as normal by following these trails, similar to the traditional concept of classical "platooning".

At some point in time, there will come a point where no more aggregated trails can be consumed, either because a) No more trails are previously observed by other ADAS vehicles and thus the aggregated trail service cannot provide any information, or b) the provided trails do no longer qualify as "recent" and "accurate" as only too little or too old data has been aggregated. In this situation, the control unit of the ADAS system can announce an alert to the driver that it will shut of its function, similar to the situation without this additional trail information. However, in general, the lead-time for the driver to take over will be higher as the ADAS System can "look-ahead" longer and decide "ahead of time" when it will run out of sufficient information to stay functional.

According to a further preferred embodiment of making ADAS decisions based on the received map, the control unit may be further configured to determine a curve speed recommendation based on the received map, e.g. a curve speed recommendation with regard to a curve associated with a specific road type, in particular the shape of aggregated trails, the road type, and the average speed information.

That is, applying the "look-ahead" provided by the consumed aggregated trails from the aggregation service, the control unit of the ADAS vehicle can calculate an appropriate velocity for the next curve to come. This recommended speed can be calculated as in classical speed recommendation systems (e.g. based on the road curvature) but without the need of the perception software stack to actually perceive the road geometry ahead. This allows for a much smoother regulation of the driving speed and the vehicle has much more time to decelerate. Depending on the difference in actual and recommended speed, the system my even continue functioning instead of alerting the driver and shutting off. This will increase the comfort and perceived availability of the speed recommendation function significantly and thus leads to a much wider acceptance range of such a system.

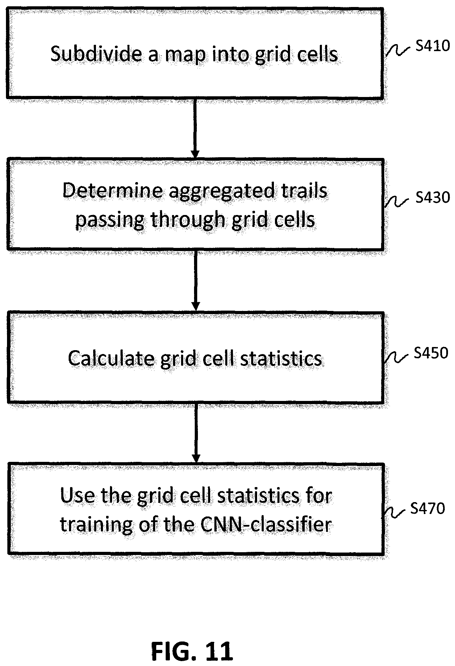

**Figure 11** shows a flowchart of a preferred embodiment for training the neural network classifier (e.g. CNN-based classifier).

According to step S410 of **Figure 11,** a map is divided into (small) grid cells of a predetermined size, for example squares of a size of 2m × 2m (see also **Figure 7**).

According to step S430 of **Figure 11,** for each of the grid cells of the map, the aggregated trails (object class specific trails) are determined passing through it. In the schematic example of **Figure 7** above, two aggregated trails are shown. Further, each aggregated trail is quantified based on its direction, e.g. quantified into a plurality of, for example 8, dominant directions (e.g. North, North East, East, etc.).

According to step S450 of **Figure 11,** a grid cell statistics (e.g. the histograms as explained above) of the object class specific aggregated trails is calculated, in particular regarding an aggregated trail direction and object class for each cell. Further, according to step S470 of **Figure 11,** the calculated grid cell statistics is used for training the CNN-based classifier.

For example, regarding the grid cell statistics of step S450, an object class specific histogram may be determined for each grid cell of the map using the object class specific aggregated trails. Preferably, the individual histograms may be determined with regard to a plurality of different directions (driving or walking) associated with the aggregated trail in a corresponding cell.

For example, a histogram of observed aggregated trail directions per grid cell and object class may be determined, e.g. one histogram for cars and another histogram for pedestrians, and each with regard to a plurality of dominant (e.g. 8) directions.

Such individual histograms may further be associated (e.g. stored) with cell-specific meta-information, such as observed speed over ground (e.g. for each of the predetermined directions) and/or an average angle deviation of trails (e.g. against a predetermined dominant direction). The skilled person understands that the average angle deviation of trails may be determined be calculating a standard deviation of all trail angels in a respective grid cell. That is, the histograms may be enriched or stored with additional meta-information.

Further, the date and time of the creation of each individual aggregated trail can be stored. This allows to assess the reliability of a trail track. In particular, aggregated trails with more recent contributions are more reliable and up-to-date and are preferably used for the cell statistics. Each cell may thus be represented by multiple such histograms whereas each histogram counts various aspects of the trails within that cell as described above. This representation (cell grid statistics) may then be input into the CNN-based classifier.

The CNN-based classifier may thus use the above cell representation as input and the annotated (previously known) POIs and road types from a HD map as ground truth for the training.

For training, a HD map of a limited local region can be used. Once the algorithm is trained, this can be generalized from this region to other geographical regions.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g. program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

While various embodiments of the present disclosure have been described above, it should be understood that they have been presented by way of example, and not limitation. It will be apparent to persons skilled in the relevant art(s) that various changes in form and detail can be made therein. Thus, the above described example embodiments are not limiting.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the embodiments presented herein in any way. It is also to be understood that any procedures recited in the claims need not be performed in the order presented.

While this specification contains many specific embodiment details, these should not be construed as limitations on the scope of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses, devices and units described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description, and changes that come within the meaning and range of equivalence of the claims are embraced therein.

**Claims**

1. A computer-implemented method of determining a point of interest and/or a road type in a map, comprising the steps of:

   - acquiring processed sensor data collected from one or more vehicles;
   - extracting from the processed sensor data a set of classification parameters; and
   - determining based on the set of classification parameters one or more points of interest (POI) and its geographic location and/or one or more road types.

2. The method of claim 1, wherein the determining is performed by using a trained neural network classifier that uses the set of classification parameters as input and outputs the at least one POI and/or road type as a classification result.

3. The method of claim 2, wherein the trained neural network classifier is a trained convolution neural network classifier.

4. The method of one of claims 1 - 3, further including:

   - detecting and tracking a plurality of objects based on sensor-based data and localization data to determine a plurality of individual trails for each of a plurality of object classes.

5. The method of claim 4, further including:

   - aggregating each of the individual trails to determine a plurality of object class specific aggregated trails in a grid cell map representation of a map.

6. The method of claim 5, wherein the determining of the one or more POI and/or at least one road type in the map is based on the object class specific aggregated trails.

7. The method of claim 6, wherein object class specific histograms are determined for each grid cell of the map using the object class specific aggregated trails.

8. The method of claim 7, wherein the histograms are determined with regard to a plurality of different driving or walking directions.

9. The method of one of claims 7 - 8, wherein the histograms include an average observed speed over ground and/or an average angle deviation of trails.

10. The method of one of claims 7 - 9, wherein the histograms include a creation time of each individual trail.

11. The method of one of claims 5 - 10, further comprising: generating the map using the object class specific aggregated trails and the determined one or more POI and/or road type.

12. The method of claim 11, wherein the map is generated by using only aggregated trails that have been aggregated by using a minimum number of individual trails and/or have been aggregated by using a minimum number of trails determined within a specific amount of time in the past.

13. The method of one of claims 11 - 12, wherein the map is generated by providing a reliability indication for the object class specific aggregated trails and/or the one or more POI and/or road type.

14. The method of one of claims 1 - 13, wherein the processed sensor data are radar-based sensor data and GPS-based sensor data.

15. The method of one of claims 1 - 13, wherein the processed sensor data are LiDAR-based sensor data and GPS-based sensor data.

16. A cloud server, adapted to perform the method of any of claim 1 - 14.

17. A vehicle, comprising:

   - a communication interface configured to receive a map including determined POIs and/or road types from a cloud server of claim 16; and
   - a control unit configured to make advanced driving and safety decisions based on the received map.

18. A system comprising a cloud server according to claim 16 and a plurality of vehicles according to claim 17.

**FIG. 1**

**FIG. 2**

**FIG. 3**

330

Working
Memory

320

Processor — I/F

340

310

Instruction Store

Computer Program

345

350

360

300

**FIG. 4**

Acquire sensor data　　　　～S110

Extract classification parameters　　　～S130

Determine POI(s) and/or road type(s)　　　～S150

**FIG. 5**

Highway
(4 Lanes)

Rural Road
(2 Lanes)

Urban Road

Urban Road
with Zebra Crossing

# FIG. 6

FIG. 7

**Rural Road
(2 Lanes)**

| Direction | ↑ | ↗ | → | ↘ | ↓ | ↙ | ← | ↖ |
|---|---|---|---|---|---|---|---|---|
| Ratio (CAR) | 0.5 | 0 | 0 | 0 | 0.5 | 0 | 0 | 0 |
| Mean Velocity (CAR) | 50 kp/h | 0 | 0 | 0 | 50 kp/h | 0 | 0 | 0 |
| Ratio (PED) | 0 | 0 | 0 | 0 | 0 | 0 | 0 | 0 |
| Mean Velocity (PED) | 0 | 0 | 0 | 0 | 0 | 0 | 0 | 0 |

## FIG. 8A

**Urban Road
with Zebra Crossing**

| Direction | ↑ | ↗ | → | ↘ | ↓ | ↙ | ← | ↖ |
|---|---|---|---|---|---|---|---|---|
| Ratio (CAR) | 0.5 | 0 | 0 | 0 | 0.5 | 0 | 0 | 0 |
| Mean Velocity (CAR) | 30 kp/h | 0 | 0 | 0 | 30 kp/h | 0 | 0 | 0 |
| Ratio (PED) | 0 | 0 | 0.5 | 0 | 0 | 0 | 0.5 | 0 |
| Mean Velocity (PED) | 0 | 0 | 3 | 0 | 0 | 0 | 3 | 0 |

## FIG. 8B

**Urban Road**

| Direction | ↑ | ↗ | → | ↘ | ↓ | ↙ | ← | ↖ |
|---|---|---|---|---|---|---|---|---|
| Ratio (CAR) | 0 | 0 | 0 | 0 | 0 | 0 | 0 | 0 |
| Mean Velocity (CAR) | 0 | 0 | 0 | 0 | 0 | 0 | 0 | 0 |
| Ratio (PED) | 0.5 | 0 | 0 | 0 | 0.5 | 0 | 0 | 0 |
| Mean Velocity (PED) | 5 kp/h | 0 | 0 | 0 | 5 kp/h | 0 | 0 | 0 |

## FIG. 8C

Acquire sensor data ⟿ S210

Determine individual object class specific trails ⟿ S230

Aggregate individual object class specific trails ⟿ S250

Extract classification parameters ⟿ S270

**FIG. 9**

Receive map including aggregated trails, POI(s) and/or road types ~ S310

ADAS decision(s) based on map ~ S330

## FIG. 10

Subdivide a map into grid cells ⟿ S410

Determine aggregated trails passing through grid cells ⟿ S430

Calculate grid cell statistics ⟿ S450

Use the grid cell statistics for training of the CNN-classifier ⟿ S470

**FIG. 11**

Europäisches
Patentamt

European
Patent Office

Office européen
des brevets

**EUROPEAN SEARCH REPORT**

Application Number

EP 23 15 2622

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/154155 A1 (GRABTAXI HOLDINGS PTE LTD [SG]) 5 August 2021 (2021-08-05) | 1-13, 16-18 | INV.<br>G01C21/00 |
| A | * paragraphs [0005], [0022] – [0024], [0032], [0035], [0044] – [0053], [0062] – [0066], [0086], [0087]; figures 2,3,7 * | 14,15 | G06N3/02 |
| X | US 2018/066957 A1 (STROILA MATEI [US] ET AL) 8 March 2018 (2018-03-08) | 1-13, 16-18 | |
| A | * paragraphs [0001], [0002], [0003], [0032], [0036], [0037], [0038], [0044] – [0052]; figures 1,3, 4, 7, 12 *<br>* paragraphs [0062], [0075] – [0085], [0094], [0095], [0100] – [0103], [0112] * | 14,15 | |
| X | US 2020/110817 A1 (VISWANATHAN ANIRUDH [US]) 9 April 2020 (2020-04-09)<br>* paragraphs [0027], [0028], [0032], [0033], [0034], [0035], [0052]; figures 1, 3, 5,6 * | 1-18 | |
| | | | TECHNICAL FIELDS SEARCHED (IPC) |
| X | US 2016/335923 A1 (HOFMANN HILKO [DE] ET AL) 17 November 2016 (2016-11-17)<br>* paragraphs [0001], [0003], [0004], [0044] – [0059]; figures 1,3, 4A,4B * | 1,4-6,16 | G01C<br>G06N |

The present search report has been drawn up for all claims

| Place of search | Date of completion of the search | Examiner |
|---|---|---|
| The Hague | 16 June 2023 | Bruinsma, Maarten |

EPO FORM 1503 03.82 (P04C01)

## ANNEX TO THE EUROPEAN SEARCH REPORT
## ON EUROPEAN PATENT APPLICATION NO.

EP 23 15 2622

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| WO 2021154155 | A1 | 05-08-2021 | CN | 113950611 A | 18-01-2022 |
| | | | SG | 11202112080W A | 29-11-2021 |
| | | | TW | 202146849 A | 16-12-2021 |
| | | | US | 2022357176 A1 | 10-11-2022 |
| | | | WO | 2021154155 A1 | 05-08-2021 |
| US 2018066957 | A1 | 08-03-2018 | EP | 3293489 A1 | 14-03-2018 |
| | | | US | 2018066957 A1 | 08-03-2018 |
| US 2020110817 | A1 | 09-04-2020 | NONE | | |
| US 2016335923 | A1 | 17-11-2016 | US | 2016335923 A1 | 17-11-2016 |
| | | | US | 2017248431 A1 | 31-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7639171 B
- US 9470777 B

- EP 3454079 A

**Non-patent literature cited in the description**

- **MANJUNATH et al.** Radar Based detection and Tracking for Autonomous Driving. *IEEE MTT-S International Conference on Microwaves for Intelligent Mobility,* 2018